# EUROPÄISCHE PATENTSCHRIFT

(11) **EP 3 332 566 B1**
(45) Veröffentlichungstag und Bekanntmachung des Hinweises auf die Patenterteilung: **17.10.2018**
(21) Anmeldenummer: 17709027.1
(22) Anmeldetag: 02.03.2017
(51) Int. Cl.: H04W 4/40

(54) **KRAFTFAHRZEUG MIT EINER KOMMUNIKATIONSEINHEIT FÜR MEHRERE STEUEREINHEITEN**
MOTOR VEHICLE WITH ONE COMMUNICATION UNIT FOR SEVERAL CONTROL UNITS
VÉHICULE AVEC UNE UNITÉ DE COMMUNICATION POUR PLUSIEURS UNITÉS DE CONTRÔLE

(30) Priorität: 11.03.2016 DE 102016002945
(43) Veröffentlichungstag der Anmeldung: 13.06.2018
(73) Patentinhaber: Audi AG, 85045 Ingolstadt (DE)
(72) Erfinder: VOIGT, Christoph, 85098 Großmehring (DE); VOLNHALS, Stefan, 85111 Adelschlag (DE); STÖCKL, Gerald, 80805 München (DE)
(86) Internationale Anmeldenummer: PCT/EP2017/054884
(87) Internationale Veröffentlichungsnummer: WO 2017/153240

(56) Entgegenhaltungen:
- EP-A1- 1 058 220
- JP-A- 2002 261 790
- Neethu Mary Judy ET AL: "Development of Communication Manager Module for Automotive Platform Software based on AUTOSAR 4.0", International Journal of Engineering Research and, 6. August 2015 (2015-08-06), XP055376857, DOI: 10.17577/IJERTV4IS080104 Gefunden im Internet: URL:http://www.ijert.org/view-pdf/13840/de velopment-of-communication-manager-module- for-automotive-platform-software-based-on- autosar-40 [gefunden am 2017-05-30]
- HEGDE R ET AL: "Load Balancing across ECUs in Automotives", COMMUNICATION SOFTWARE AND NETWORKS, 2009. ICCSN '09. INTERNATIONAL CONFERENCE ON, IEEE, PISCATAWAY, NJ, USA, 27. Februar 2009 (2009-02-27), Seiten 404-408, XP031476546, ISBN: 978-0-7695-3522-7

## Beschreibung

Die Erfindung betrifft ein Kraftfahrzeug mit einer Kommunikationseinheit, die zumindest ein Funkmodul aufweist, um eine Funkverbindung mit zumindest einem fahrzeugexternen Objekt für einen Austausch von Kommunikationsdaten bereitzustellen oder zu betreiben. In dem Kraftfahrzeug sind mehrere Funktionsprogramme vorgesehen, die jeweils eine Fahrzeugfunktionalität auf Basis dieser Kommunikationsdaten bereitstellen. Zu der Erfindung gehört auch ein Verfahren zum Bereitstellen dieser Fahrzeugfunktionalitäten.

In einem Kraftfahrzeug können sogenannte Online-Fahrzeugfunktionalitäten bereitgestellt sein, welche Kommunikationsdaten nutzen, die über eine Funkverbindung aus einem fahrzeugexternen Objekt empfangen und/oder an das fahrzeugexterne Objekt ausgesendet werden. Ein Beispiel für eine solche Fahrzeugfunktionalität ist die Car-2-Car-Kommunikation, wie sie beispielsweise auf der Internetseite www.car-2-car.org beschrieben ist. Die Car-2-Car-Meldungen stellen dabei die Kommunikationsdaten dar. Eine andere Fahrzeugfunktionalität dieser Art ist die Fernwartung, bei welcher beispielsweise Softwareupdates über eine Funkverbindung in das Kraftfahrzeug übertragen und dort in eine Steuereinheit oder ein Steuergerät eingespielt oder abgespeichert werden können. Das Softwareupdate stellt dann die Kommunikationsdaten dar. Jede dieser Fahrzeugfunktionalitäten kann jeweils durch ein Funktionsprogramm realisiert sein.

Bei heutigen Kraftfahrzeugen ist in der Regel vorgesehen, diese Funktionsprogramme in der Kommunikationseinheit bereitzustellen, welche auch das zumindest eine Funkmodul aufweist, mittels welchem die jeweilige Funkverbindung zu dem zumindest einen fahrzeugexternen Objekt, also beispielsweise einem anderen Kraftfahrzeug oder einem Mobilfunknetzwerk, bereitgestellt wird. Dies weist den Nachteil auf, dass die Anzahl und/oder der Umfang der Funktionsprogramme durch die Rechenleistung der Kommunikationseinheit begrenzt sind. Andererseits weist das Bereitstellen einer zusätzlichen Prozessoreinrichtung zum Ausführen weiterer Funktionsprogramme das Problem auf, dass die Funktionsprogramme dahingehend angepasst oder umstrukturiert werden müssen, dass sie von dieser Prozessoreinrichtung aus indirekt über die Kommunikationseinheit Kommunikationsdaten mit den fahrzeugexternen Objekten austauschen können. Dies erfordert also einen Anpassungsaufwand bei den Funktionsprogrammen.

Die EP 1 058 220 A1 beschreibt ein Kommunikationssystem für ein Fahrzeug, das eine oder mehrere Anwendungseinheiten, d.h. Einheiten, die zugehörige Anwendungsfunktionen durchführen, beinhaltet, sowie mehrere Funkkommunikationskanäle zur Kommunikation der Anwendungseinheiten mit der Fahrzeugaußenwelt, insbesondere unterschiedlichen Mobilfunkkommunikationskanälen.

Die JP 2002 261 790 A1 beschreibt Module eines Kraftfahrzeugs mit einer standardisierten Schnittstelle zu einem LAN des Kraftfahrzeugs.

Der Erfindung liegt die Aufgabe zugrunde, in einem Kraftfahrzeug Funktionsprogramme zu betreiben, die darauf angewiesen sind, Kommunikationsdaten mit fahrzeugexternen Objekten auszutauschen.

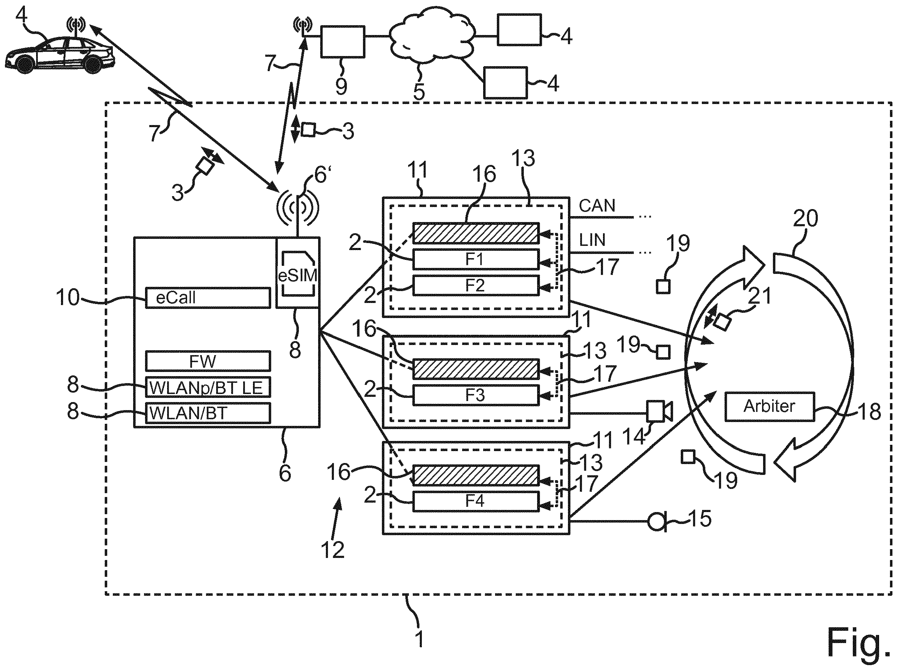

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figur offenbart.

Durch die Erfindung ist ein Kraftfahrzeug bereitgestellt, das die beschriebene Kommunikationseinheit aufweist, welche zumindest ein Funkmodul aufweist und dazu eingerichtet ist, mittels des zumindest einen Funkmoduls eine jeweilige Funkverbindung zu zumindest einem fahrzeugexternen Objekt zu betreiben, um Kommunikationsdaten mit diesem auszutauschen. In dem Kraftfahrzeug sind mehrere Funktionsprogramme bereitgestellt, welche dazu eingerichtet sind, eine jeweilige Fahrzeugfunktionalität bereitzustellen, die auf den Kommunikationsdaten basiert, also das Aussenden von Kommunikationsdaten hin zu dem zumindest fahrzeugexternen Objekt und/oder das Empfangen von Kommunikationsdaten aus dem zumindest einen fahrzeugexternen Objekt vorsieht. Bei dem fahrzeugexternen Objekt kann es sich in der beschriebenen Weise z.B. um ein anderes Kraftfahrzeug oder eine Infrastrukturkomponente (d.h. ein fest im Verkehrswegesystem angeordnetes Objekt, beispielsweise eine Ampel und/oder ein Verkehrsschild) oder ein Mobilfunknetzwerk oder ein WLAN Netzwerk (WLAN - Whireless Local Area Network) oder einen Server des Internets handeln. Ein solcher Server kann ein sogenanntes Backend darstellen, welches Daten aus mehreren Kraftfahrzeugen empfängt und diese z.B. aggregiert, um hierdurch eine Umgebungsbeschreibung oder Umfeldbeschreibung zu erzeugen.

Um nun die Anzahl und/oder den Umfang der Funktionsprogramme unabhängig von einer Rechenleistung der Kommunikationseinheit zu machen, ist erfindungsgemäß vorgesehen, dass mehrere von der Kommunikationseinheit verschiedene Steuereinheiten bereitgestellt sind (also beispielsweise weitere oder andere Steuergeräte), von denen jede ein Dienstmodul aufweist. Ein solches Dienstmodul kann eine elektronische Schaltung und/oder einen Programmcode umfassen. Jedes Dienstmodul ist dazu eingerichtet, unabhängig von den Funktionsprogrammen die Kommunikationsdaten von der jeweiligen Steuereinheit aus, in welcher sich das Dienstmodul befindet, über die Kommunikationseinheit und die jeweilige Funkverbindung mit dem zumindest einen fahrzeugexternen Objekt auszutauschen. Ein Dienstmodul stellt also all diejenigen Dienstfunktionen oder Dienstfunktionalitäten bereit, die zum eigentlichen Austauschen der Kommunikationsdaten mit dem zumindest einen fahrzeugexternen Objekt nötig sind. Die Funktionsprogramme sind auf den besagten Steuereinheiten verteilt angeordnet und dazu eingerichtet, die Kommunikationsdaten nicht selbst mit einem fahrzeugexternen Objekt auszutauschen sondern stattdessen die Kommunikationsdaten nur mit dem jeweiligen Dienstmodul der Steuereinheit auszutauschen, und die einheitenexterne Kommunikation von der Steuereinheit bis hin zum jeweiligen fahrzeugexternen Objekt durch das Dienstmodul bereitgestellt ist. Mit anderen Worten muss keines der Funktionsprogramme dazu eingerichtet sein, selbst die Kommunikationsdaten über die Kommunikationseinheit und eine Funkverbindung mit dem zumindest einen fahrzeugexternen Objekt auszutauschen. Stattdessen ist vorgesehen, dass jedes Funktionsprogramm den Austausch der Kommunikationsdaten lediglich mit dem jeweiligen Dienstmodul seiner Steuereinheit ausführt oder durchführt.

Durch den Betrieb des erfindungsgemäßen Kraftfahrzeugs ergibt sich das folgende erfindungsgemäße Verfahren zum Bereitstellen mehrerer Fahrzeugfunktionalitäten, die auf den beschriebenen Kommunikationsdaten basieren, die wiederum mit fahrzeugexternen Objekten ausgetauscht werden. In dem Kraftfahrzeug betreibt die Kommunikationseinheit mittels zumindest eines Funkmoduls eine jeweilige Funkverbindung zu zumindest einem fahrzeugexternen Objekt. Mehrere Funktionsprogramme stellen jeweils eine der Fahrzeugfunktionalitäten bereit, also beispielsweise eine Navigation und/oder eine Car-2-X-Kommunikation. Die Funktionsprogramme selbst sind auf mehrere von der Kommunikationseinheit verschiedene Steuereinheiten verteilt angeordnet, wo sie jeweils ausgeführt werden. Hierbei betreiben die Steuereinheiten jeweils ein Dienstmodul, welches unabhängig von den Funktionsprogrammen die Kommunikationsdaten von der jeweiligen Steuereinheit aus über die Kommunikationseinheit und die jeweilige Funkverbindung mit dem zumindest einen fahrzeugexternen Objekt austauscht und hierzu all diejenigen Dienstfunktionen bereitstellt, die zum eigentlichen Austauschen der Kommunikationsdaten mit dem zumindest einen fahrzeugexternen Objekt nötig sind. Die Funktionsprogramme selbst tauschen die Kommunikationsdaten mit dem jeweiligen Dienstmodul der Steuereinheit aus. Mit anderen Worten müssen die Funktionsprogramme nur dazu ausgelegt sein, die Kommunikationsdaten innerhalb der Steuereinheit mit dem Dienstmodul auszutauschen. Die einheitenexterne Kommunikation, also von der Steuereinheit bis hin zum jeweiligen fahrzeugexternen Objekt, wird durch das Dienstmodul durchgeführt oder bereitgestellt.

Durch die Erfindung ergibt sich der Vorteil, dass die Rechenleistung im Kraftfahrzeug dadurch angepasst werden kann, dass entsprechend viele und/oder leistungsstarke Steuereinheiten bereitgestellt werden, die von der eigentlichen Kommunikationseinheit verschieden sind. Dennoch muss keines der Funktionsprogramme dazu angepasst werden, von der jeweiligen Steuereinheit aus die Kommunikationsdaten mit dem zumindest einen fahrzeugexternen Objekt auszutauschen. Den Austausch der Kommunikationsdaten kann das Funktionsprogramm mit dem jeweils lokalen, in der Steuereinheit bereitgestellten Dienstmodul durchführen. Die eigentliche Übertragung, das heißt der Austausch mit dem zumindest einen fahrzeugexternen Objekt, wird durch das Dienstmodul durchgeführt. Dem jeweiligen Funktionsprogramm ist es somit egal, wo es ausgeführt wird.

Zu der Erfindung gehören auch optionale Weiterbildungen, durch deren Merkmale sich zusätzliche Vorteile ergeben.

Gemäß einer Weiterbildung sind die Dienstmodule der Steuereinheiten derart gleich ausgestaltet, dass ein Funktionsprogramm abwechselnd auch auf zwei unterschiedlichen Steuereinheiten ausführbar ist. Insbesondere ist hierbei vorgesehen, dass eine Applikationsschnittstelle (API - Application Programming Interface), über welche der Austausch der Kommunikationsdaten zwischen dem Dienstmodul und einem Funktionsprogramm durchgeführt wird, bei jedem der Dienstmodule gleich ausgestaltet ist. Hierdurch ist es dann in vorteilhafter Weise frei einstellbar oder auswählbar, auf welcher Steuereinheit ein Funktionsprogramm installiert oder bereitgestellt wird.

Die Dienstmodule sind bevorzugt dazu eingerichtet, für die Funktionsprogramme eine Authentifizierung bei dem zumindest einen fahrzeugexternen Objekt und/oder eine Verschlüsselung von auszusendenden Kommunikationsdaten und/oder eine Entschlüsselung empfangener Kommunikationsdaten durchzuführen. Hierdurch können die Funktionsprogramme besonders einfach ausgestaltet sein.

Um nicht schon beim Herstellen des Kraftfahrzeugs festgelegt zu sein, welches Funktionsprogramm in welcher Steuereinheit betrieben werden soll, ist bevorzugt vorgesehen, in zumindest zwei der Steuereinheiten jeweils eine Kopie desselben Funktionsprogramms bereitzustellen. Die Steuereinheiten sind dabei dazu eingerichtet, jeweils eine der Kopie zur Zeit zu betreiben. Die durch das Funktionsprogramm bereitgestellte Fahrzeugfunktionalität wird also zu jedem Zeitpunkt nur durch eine Kopie des Funktionsprogramms bereitgestellt. Es ist aber möglich, zu einem anderen Zeitpunkt dieselbe Fahrzeugfunktionalität durch eine Kopie in einer anderen Steuereinheit bereitzustellen. Hierdurch sind die Fahrzeugfunktionalitäten in dem Kraftfahrzeug verlagerbar, das heißt an unterschiedlichen Ausführungsorten bereitstellbar.

Besonders bevorzugt ist hierbei, dass die Steuereinheiten dazu eingerichtet sind, einen Wechsel von einer Steuereinheit zu einer anderen durchzuführen, der hier als Gerätewechsel bezeichnet ist. Für den Gerätewechsel wird eine der Kopien des Fahrzeugprogramms im laufenden Betrieb des Kraftfahrzeugs angehalten. Es wird ein Parametersatz ermittelt, welcher einen aktuellen Betriebszustand der angehaltenen Kopie beschreibt. Der Betriebszustand beschreibt den aktuellen Zustand der Fahrzeugfunktionalität. Es wird bei einer anderen Kopie des Funktionsprogramms mittels dieses Parametersatzes der Betriebszustand eingestellt und diese Kopie in Betrieb genommen. Mit anderen Worten macht diese Kopie des Funktionsprogramms also dort weiter, wo die vorangegangene Kopie angehalten wurde. Hierdurch ist also ein nahtloser Gerätewechsel von einer Steuereinheit zu einer anderen möglich. Im Kraftfahrzeug wird hierbei die Fahrzeugfunktionalität kontinuierlich, das heißt ohne eine sprunghafte Veränderung des Betriebszustands, bereitgestellt.

Bevorzugt wird dies für ein sogenanntes Load-Balancing verwendet. Hierbei ist eine Arbitereinheit vorgesehen, die dazu eingerichtet ist, eine jeweilige Ressourcenauslastung der Steuereinheiten zu ermitteln und durch den beschriebenen Wechsel die Ressourcenauslastungen der Steuereinheiten aneinander anzugleichen. Beispielsweise kann der Gerätewechsel ausgelöst werden, falls eine Ressourcenauslastung einer der Steuereinheiten größer als ein vorbestimmter Schwellenwert ist.

Bei den beschriebenen Fahrzeugfunktionalitäten handelt es sich insbesondere um zumindest eine der folgenden: eine Navigation, eine Sprachbedienung, eine Verarbeitung von Sensorsignalen, eine Car-2-X-Kommunikation und/oder eine Fernwartung. Die Car-2-X-Kommunikation findet hierbei zwischen dem Kraftfahrzeug einerseits und einem Fremdfahrzeug (Car-2-Car) und/oder einer Infrastrukturkomponente andererseits statt. Eine Infrastrukturkomponente ist eine fest im Verkehrswegesystem angeordnetes Objekt, beispielsweise eine Ampel und/oder ein Verkehrsschild.

Um die Kommunikationsdaten zuverlässig mit dem zumindest einen fahrzeugexternen Objekt auszutauschen, ist insbesondere vorgesehen, dass das zumindest eine Funkmodul der Kommunikationseinheit ein Mobilfunkmodul, beispielsweise ein LTE-Modul (LTE-Long Term Evolution), und/oder ein WLAN-Modul und/oder eine Bluetooth-Modul umfasst.

Um die die Funktionsprogramme aufweisenden Steuereinheiten untereinander und mit der Kommunikationseinheit zu koppeln, ist bevorzugt vorgesehen, dass die Kommunikationseinheit und die Steuereinheiten über ein paketorientiertes Datennetzwerk miteinander gekoppelt sind. Besonders bevorzugt ist hierbei, dass ein Ethernet-Netzwerk, insbesondere ein Gigabit-Ethernet, bereitgestellt ist. Ein paketorientiertes Datennetzwerk weist den Vorteil auf, dass die Nutzung des Datennetzwerks bedarfsgerecht und dynamisch angepasst wird. Es ist beim Konfigurieren des Kraftfahrzeugs keine Festlegung beispielsweise von fest vorgegebenen Zeitslots nötig.

Das erfindungsgemäße Kraftfahrzeug ist bevorzugt als Kraftwagen, insbesondere als Personenkraftwagen, ausgestaltet.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 1, bei dem es sich beispielsweise um einen Kraftwagen, insbesondere einen Personenkraftwagen, handeln kann. In dem Kraftfahrzeug 1 sind mehrere Funktionsprogramme 2 bereitgestellt, durch die jeweils eine Fahrzeugfunktionalität F1, F2, F3, F4 bereitgestellt sein kann. Als Fahrzeugfunktionalitäten F1, F2, F3, F4 können beispielsweise vorgesehen sein: eine Fernwartung von Komponenten des Kraftfahrzeugs 1, beispielsweise das Einspielen von Update-Software, und/oder eine Umfeldüberwachung auf der Basis einer Car-2-X-Kommunikation und/oder das Übertragen von Sensordaten und/oder eine Online-Spracherkennung und/oder eine online-basierte Sprachbedienung. Die Fahrzeugfunktionalitäten F1-F4 basieren hierbei auf einem Austausch von Kommunikationsdaten 3 mit fahrzeugexternen Objekten 4, bei denen es sich beispielsweise um Fremdfahrzeuge und/oder einen oder mehrere Server des Internets 5 handeln kann.

Zum Übertragen der Kommunikationsdaten 3 zwischen den Objekten 4 und dem Kraftfahrzeug 1 kann eine Kommunikationseinheit 6 in dem Kraftfahrzeug 1 bereitgestellt sein. Die Kommunikationsdaten 3 können dabei über eine jeweilige Funkverbindung 7 mit den Objekten 4 ausgetauscht werden. Zum Aufbauen und/oder Aufrechterhalten oder Betreiben der Funkverbindungen 7 weist die Kommunikationseinheit zumindest ein Funkmodul 8 auf, beispielsweise ein Mobilfunkmodul, das eine Mobilfunkverbindung mit einem Mobilfunknetz 9 auf Grundlage einer SIM (Subscriber Identification Module) oder einer eSIM (embedded SIM) aufbauen kann. Über das Mobilfunknetz 9 kann z.B. mit Servern des Internets kommuniziert werden. Zumindest ein weiteres Funkmodul kann für das Bereitstellen einer WLAN-Verbindung und/oder einer Bluetooth-Verbindung BT vorgesehen sein. Die WLAN-Verbindung zu einem Fremdfahrzeug kann auf der Basis des Standards WLANp (Standard IEEE802.11p) und/oder Bluetooth LE (LE - Low Energy) bereitgestellt sein. Die Kommunikationseinheit 6 kann beispielsweise ein Steuergerät für ein Antennenmodul 6', beispielsweise eine Dachantenne, sein.

Der Austausch der Kommunikationsdaten 3 über die Funkverbindungen 7 kann durch einen Firewall-Schutzmechanismus FW geschützt sein, um eine Manipulation des Kraftfahrzeugs 1 von außerhalb zu verhindern. Die Kommunikationseinheit 6 kann des Weiteren eine an sich bekannte Notruf-Funktion 10 aufweisen, die auch als eCall bezeichnet wird.

Die Funktionsprogramme 2 müssen dagegen nicht durch die Kommunikationseinheit 6 ausgeführt werden.

Stattdessen können weitere Steuergeräte oder Steuereinheiten 11 über ein Datennetzwerk 12 in dem Kraftfahrzeug 1 mit der Kommunikationseinheit 6 gekoppelt sein. Jede der Steuereinheiten 6 kann eine Prozessoreinrichtung 13 aufweisen, beispielsweise einen oder mehrere Mikroprozessoren oder Mikrocontroller, durch welche jeweils zumindest eines der Funktionsprogramme 2 ausgeführt werden kann, so dass durch die jeweilige Steuereinheit 11 die entsprechende Fahrzeugfunktionalität F1-F4 des ausgeführten Funktionsprogramms 2 bereitgestellt oder realisiert oder ausgeführt wird. Welches Funktionsprogramm 2 auf welcher Steuereinheit 11 ausgeführt wird, kann beispielsweise in Abhängigkeit davon festgelegt werden, welche weiteren Komponenten von dem Funktionsprogramm 2 zum Bereitstellen der Fahrzeugfunktionalität F1-F4 noch benötigt werden. Beispielsweise kann ein Funktionsprogramm 2 eine oder mehrere Busanschlüsse 14 zum Kommunizieren mit weiteren Fahrzeugkomponenten benötigen. Die Busanschlüsse können beispielsweise für einen CAN-Bus (CAN - Controller Area Network) und/oder einen LIN-Bus (LIN - Local Interconnect Network) sein. Eine Steuereinheit 11 kann auch beispielsweise an eine Kamera 14 angeschlossen sein, über welche eine Umfeldüberwachung oder Fahrzeuginnenraumüberwachung als Fahrzeugfunktionalität F3 ermöglicht ist. Ein Funktionsprogramm 2 kann beispielsweise ein Mikrofon 15 als Datenquelle für Mikrofondaten benötigen und auf einer entsprechenden Steuereinheit 11, an welcher ein Mikrofon 15 angeschlossen ist, betrieben werden. Beispiele für geeignete Steuereinheiten 11 sind: ein Gateway zum Koppeln von Datennetzwerken und/oder Bussystemen des Kraftfahrzeugs 1, ein Fahrerassistenzsystem, ein Infotainmentsystem (Informations- und Unterhaltungssystem), ein Fahrzeuginformationssystem.

Obwohl die Funktionsprogramme 2 nicht direkt durch die Kommunikationseinheit 6 selbst ausgeführt werden und damit keinen direkten Zugang zu den Funkverbindungen 7 über die Funkmodule 8 haben, sind die Funktionsprogramme 2 nicht in besonderer Weise angepasst worden, um zusätzlich über das Datennetzwerk 12 mit der Kommunikationseinheit 2 kommunizieren zu können. Stattdessen ist in jeder Steuereinheit 11 ein Dienstmodul 16 bereitgestellt, welches den Datenaustausch zwischen der jeweiligen Steuereinheit 11 und der Kommunikationseinheit 6 und weiter bis hin zum jeweiligen fahrzeugexternen Objekt 4 verwaltet oder steuert oder konfiguriert. Beispielsweise kann durch jedes Dienstmodul 16 beispielsweise eine Authentifizierung und/oder Verschlüsselung für die Übertragung der Kommunikationsdaten 3 durchgeführt werden. Innerhalb jeder Steuereinheit 11 findet ein interner Austausch 17 der Kommunikationsdaten 3 zwischen dem Dienstmodul 16 einerseits und dem jeweiligen Funktionsprogramm 2 andererseits statt. Somit muss jedes Funktionsprogramm 2 nur dahingehend ausgelegt oder gestaltet sein, dass es innerhalb einer Steuereinheit 11 Kommunikationsdaten mit dem Dienstmodul 16 austauschen kann.

Die Dienstmodule 16 können bei allen Steuereinheiten 11 derart gleichartig ausgestaltet sein, dass ein Funktionsprogramm 2 abwechselnd auch auf zwei unterschiedliche Steuereinheiten 11 ausgeführt werden kann. Hierzu ist dann in jeder Steuereinheit 11 beispielsweise eine Kopie des jeweiligen Funktionsprogramms F1-F4 bereitgestellt. Durch eine Arbitereinheit 18 können jeweilige Auslastungsdaten 19 der Steuereinheiten 11 ermittelt werden, also beispielsweise eine Prozessorauslastung der jeweiligen Prozessoreinrichtung 13. Die Arbitereinheit 18 kann beispielsweise ein Programmmodul einer der Steuereinheiten 11 oder eines weiteren Steuergeräts sein. In Abhängigkeit von den Auslastungsdaten 19 kann durch die Arbitereinheit 18 gesteuert werden, welche der Kopien eines Funktionsprogramms 2 gestartet oder betrieben wird. Hierdurch kann ein Load-Balancing 20 erreicht werden, also ein Angleich der Auslastung der Steuereinheiten 11. Um einen Wechsel zwischen den Steuereinheiten 11 zu ermöglichen, kann zu einem angehaltenen Funktionsprogramm 2 ein Parametersatz 21 ermittelt werden, welcher den aktuellen Betriebszustand des Funktionsprogramms beschreibt. Eine Kopie des Funktionsprogramms auf einer anderen Steuereinheit 11 kann dann dahingehend konfiguriert werden, dass es bei seiner Ausführung dort die jeweilige Fahrzeugfunktionalität F1-F4 fortführt, wo das angehaltene Funktionsprogramm 2 aufgehört hat.

Somit ist bei dem Kraftfahrzeug 1 ermöglicht, dass Fahrzeugfunktionalitäten F1-F4 auf mehrere Steuergeräte oder Steuereinheiten 11 verteilt werden, ohne dass die Funktionsprogramme 2 hierzu angepasst werden müssen, weil eigene Dienstmodule 16 jeder Steuereinheit 11 eine entsprechende Kommunikations-Infrastruktur, beispielsweise für die Authentifizierung und/oder Verschlüsselung, bereitstellen. Durch gleichartige Softwarearchitektur in den Steuereinheiten 11, also insgesamt durch gleichartige Beschaffenheit der Dienstmodule 16, ist auch eine dynamische Verteilung der Fahrzeugfunktionalitäten F1-F4 zwischen den Steuereinheiten 11 zur Laufzeit möglich, um hierdurch das beschriebene Load-Balancing 20 zu ermöglichen. Die dynamische Verteilung der Fahrzeugfunktionalitäten F1-F4 geschieht zur Laufzeit über die Arbitereinheit 18, welcher entsprechend der Kopien der Funktionsprogramme 2 anhält beziehungsweise startet oder aktiviert.

Es gibt also bevorzugt mehrere Instanzen (Steuergeräte wie beispielsweise ein Gateway für Kommunikationsnetzwerke des Kraftfahrzeugs, ein Infotainmentsystem, ein Fahrerassistenzsystem), die alle separate Kern-Dienste oder Dienstmodule 16 aufweisen. Die Steuerung der Funkverbindungen 7, also die Modemfunktion der Funkmodule 8, und die Dienstmodule 16 sind somit auf zumindest zwei verschiedenen Steuergeräten oder Steuereinheiten 11 beziehungsweise die Kommunikationseinheit 6 verteilt angeordnet. Durch jedes Dienstmodul 16 kann eine Authentifizierung und/oder Identifizierung des jeweiligen Funktionsprogramms 2 durchgeführt werden. Eine Steuereinheit 11 kann auch beispielsweise durch ein mit dem Kraftfahrzeug 1 gekoppeltes, portables, mobiles Endgerät, beispielsweise ein Smartphone oder ein Tablet-PC; realisiert oder bereitgestellt sein.

Durch das Load-Balancing 20 ist die Verteilung der Funktionsprogramme 2 an die unterschiedliche Rechenleistung der Steuereinheiten 11 anpassbar. Durch die gleichartige Ausgestaltung der Dienstmodule 16 und der Betriebssysteme zum Ausführen der Funktionsprogramme 2 lassen sich die Funktionsprogramme 2 auch nachträglich auf frei auswählbaren Steuereinheiten 11 ausführen.

Insgesamt zeigt das Beispiel, wie durch die Erfindung mittels einer Kommunikationseinheit und mehreren Steuereinheiten eine dezentralisierte Connected-Car-Architektur bereitgestellt und durch eine Arbitereinheit ein Load-Balancing durchgeführt werden kann.

## Patentansprüche

1. Kraftfahrzeug (1) mit
- einer Kommunikationseinheit (6), welche zumindest ein Funkmodul (8) aufweist und dazu eingerichtet ist, mittels des zumindest einen Funkmoduls (8) eine jeweilige Funkverbindung (7) zu zumindest einem fahrzeugexternen Objekt (4) zum Austauschen von Kommunikationsdaten (3) zu betreiben, wobei
- in dem Kraftfahrzeug (1) mehrere Funktionsprogramme (2) bereitgestellt sind, welche dazu eingerichtet sind, eine jeweilige auf den Kommunikationsdaten (3) basierende Fahrzeugfunktionalität (F1-F4) bereitzustellen, und wobei
- mehrere von der Kommunikationseinheit (6) verschiedene Steuereinheiten (11) bereitgestellt und die Funktionsprogramme (2) auf die Steuereinheiten (11) verteilt angeordnet sind,
**dadurch gekennzeichnet, dass**
- von den Steuereinheiten (11) jede ein Dienstmodul (16) aufweist, welches dazu eingerichtet ist, unabhängig von den Funktionsprogrammen (2) die Kommunikationsdaten (3) von der jeweiligen Steuereinheit (11) aus über die Kommunikationseinheit (6) und die jeweilige Funkverbindung (7) mit dem zumindest einen fahrzeugexternen Objekt (4) auszutauschen und hierzu all diejenigen Dienstfunktionen bereitzustellen, die zum eigentlichen Austauschen der Kommunikationsdaten (3) mit dem zumindest einen fahrzeugexternen Objekt (4) nötig sind,
- wobei die Funktionsprogramme (2) dazu eingerichtet sind, die Kommunikationsdaten (3) mit dem jeweiligen Dienstmodul (16) der Steuereinheit (11) auszutauschen, und hierbei die Funktionsprogramme nur dazu ausgelegt sind, die Kommunikationsdaten (3) innerhalb der Steuereinheit (3) mit dem Dienstmodul (16) auszutauschen, und die einheitenexterne Kommunikation von der Steuereinheit (11) bis hin zum jeweiligen fahrzeugexternen Objekt (4) durch das Dienstmodul (16) bereitgestellt ist.

2. Kraftfahrzeug (1) nach Anspruch 1, wobei die Dienstmodule (16) der Steuereinheiten (11) derart gleich ausgestaltet sind, dass ein Funktionsprogramm (2) abwechselnd auch auf zwei unterschiedlichen Steuereinheiten (11) ausführbar ist.

3. Kraftfahrzeug (1) nach einem der vorhergehenden Ansprüche, wobei die Dienstmodule (16) dazu eingerichtet sind, für die Funktionsprogramme (2) eine Authentifizierung bei dem zumindest eine fahrzeugexternen Objekt (4) und/oder eine Verschlüsselung von auszusendenden Kommunikationsdaten (3) und/oder eine Entschlüsselung empfangender Kommunikationsdaten (3) durchzuführen.

4. Kraftfahrzeug (1) nach einem der vorhergehenden Ansprüche, wobei in zumindest zwei der Steuereinheiten (11) jeweils eine Kopie desselben Funktionsprogramms (2) bereitgestellt ist und die Steuereinheiten (11) dazu eingerichtet sind, jeweils eine der Kopien zur Zeit zu betreiben.

5. Kraftfahrzeug (1) nach Anspruch 4, wobei die Steuereinheiten (11) dazu eingerichtet sind, für einen Wechsel von einer Steuereinheit (11) zu einer anderen (11) eine der Kopien im laufenden Betrieb anzuhalten und einen Parametersatz (21), welcher einen aktuellen Betriebszustand der angehaltenen Kopie beschreibt, zu ermitteln und bei einer anderen der Kopien mittels des Parametersatzes (21) den Betriebszustand einzustellen und diese Kopie in Betrieb zu nehmen.

6. Kraftfahrzeug (1) nach Anspruch 5, wobei eine Arbitereinheit (18) dazu eingerichtet ist, eine jeweilige Ressourcenauslastung der Steuereinheiten (11) zu ermitteln und durch den Wechsel die Ressourcenauslastungen aneinander anzugleichen.

7. Kraftfahrzeug (11) nach einem der vorhergehenden Ansprüche, wobei als Fahrzeugfunktionalitäten (F1-F4) zumindest eine der folgenden bereitgestellt ist: Navigation, Sprachbedienung, Verarbeitung von Sensorsignalen, Car-2-X-Kommunikation, Fernwartung.

8. Kraftfahrzeug (1) nach einem der vorhergehenden Ansprüche, wobei das zumindest eine Funkmodul (8) ein Mobilfunkmodul und/oder eine WLAN-Modul und/oder ein Bluetooth-Modul umfasst.

9. Kraftfahrzeug (1) nach einem der vorhergehenden Ansprüche, wobei die Kommunikationseinheit (6) und die Steuereinheiten (11) über ein paketorientiertes Datennetzwerk (12) miteinander gekoppelt sind.

10. Verfahren zum Bereitstellen mehrerer Fahrzeugfunktionalitäten (F1-F4), die auf mit fahrzeugexternen Objekten (4) ausgetauschten Kommunikationsdaten (3) basieren, in einem Kraftfahrzeug (1), wobei
- eine Kommunikationseinheit (6) mittels zumindest eines Funkmoduls (8) eine jeweilige Funkverbindung (7) zu dem zumindest einem fahrzeugexternen Objekt (4) betreibt, und
- mehrere Funktionsprogramme (2) jeweils eine der Fahrzeugfunktionalitäten (F1-F4) bereitstellen,
**dadurch gekennzeichnet, dass**
- mehrere von der Kommunikationseinheit (6) verschiedene Steuereinheiten (11) jeweils ein Dienstmodul (16) betreiben, welches unabhängig von den Funktionsprogrammen (2) die Kommunikationsdaten (3) von der jeweiligen Steuereinheit (11) aus über die Kommunikationseinheit (6) und die jeweilige Funkverbindung (7) mit dem zumindest einen fahrzeugexternen Objekt (4) austauscht und hierzu all diejenigen Dienstfunktionen bereitstellt, die zum eigentlichen Austauschen der Kommunikationsdaten (3) mit dem zumindest einen fahrzeugexternen Objekt (4) nötig sind, und
- die Funktionsprogramme (2) auf die Steuereinheiten (11) verteilt angeordnet sind und die Kommunikationsdaten (3) mit dem jeweiligen Dienstmodul (16) der Steuereinheit (11) austauschen und hierbei die Funktionsprogramme nur Kommunikationsdaten (3) innerhalb der Steuereinheit (3) mit dem Dienstmodul (16) austauschen und die einheitenexterne Kommunikation von der Steuereinheit (11) bis hin zum jeweiligen fahrzeugexternen Objekt (4) durch das Dienstmodul (16) durchgeführt wird.

## Claims

1. Motor vehicle (1) having
- a communication unit (6) which has at least one radio module (8) and is set up to use the at least one radio module (8) to operate a respective radio link (7) to at least one vehicle-external object (4) for the purpose of interchanging communication data (3), wherein
- a plurality of functional programs (2) are provided in the motor vehicle (1) which are set up to provide a respective vehicle functionality (F1-F4) based on the communication data (3), and wherein
- a plurality of control units (11) different from the communication unit (6) are provided and the functional programs (2) are distributed over the control units (11),
**characterised in that**
- each of the control units (11) has a service module (16), which is set up to interchange the communication data (3) from the respective control unit (11) with the at least one vehicle-external object (4) via the communication unit (6) and the respective radio link (7) independently of the functional programs (2), and for this purpose, to provide all the service functions that are necessary for the actual interchange of the communication data (3) with the at least one vehicle-external object (4),
- wherein the functional programs (2) are set up to interchange the communication data (3) with the respective service module (16) of the control unit (11), and here the functional programs are only designed to interchange the communication data (3) with the service module (16) within the control unit (3), and unit-external communication from the control unit (11) to the respective vehicle-external object (4) is executed by the service module (16).

2. Motor vehicle (1) according to claim 1, wherein the service modules (16) of the control units (11) are configured in the same way such that a functional program (2) can also be executed alternately on two different control units (11).

3. Motor vehicle (1) according to either of the preceding claims, wherein the service modules (16) are set up to perform an authentication for the functional programs (2) of the at least one vehicle-external object (4) and/or an encryption of communication data (3) to be transmitted and/or a decryption of incoming communication data (3).

4. Motor vehicle (1) according to any one of the preceding claims, wherein a copy of the same functional programs (2) is provided in at least two of the control units (11) and the control units (11) are each set up to run one of the copies at a time.

5. Motor vehicle (1) according to claim 4, wherein the control units (11) are set up to pause one of the copies during operation for a switch from one control unit (11) to another (11) and to determine a set of parameters (21), which describes a current operating state of the paused copy, and for another of the copies, suspend the operating state by means of the set of parameters (21) and set said copy running.

6. Motor vehicle (1) according to claim 5, wherein an arbiter unit (18) is set up to determine a respective resource utilisation of the control units (11) and align resource utilisations through the switch.

7. Motor vehicle (11) according to any one of the preceding claims, wherein at least one the following is provided as vehicle functionalities (F1-F4): navigation, voice activation, processing of sensor signals, car-2-X communication, remote maintenance.

8. Motor vehicle (1) according to any one of the preceding claims, wherein the at least one radio module (8) comprises a mobile radio module and/or a WLAN module and/or a Bluetooth module.

9. Motor vehicle (1) according to any one of the preceding claims, wherein the communication unit (6) and the control units (11) are coupled to one another via a packet-oriented data network (12).

10. Method for providing a plurality of vehicle functionalities (F1-F4), which are based on communication data (3) interchanged with vehicle-external objects (4), in a motor vehicle (1), wherein
- a communication unit (6) operates a respective radio link (7) to the at least one vehicle-external object (4) by means of at least one radio module (8), and
- a plurality of functional programs (2) each provide one of the vehicle functionalities (F1-F4),
**characterised in that**
- a plurality of control units (11) different from the communication unit (6) each operate a service module (16), which interchanges the communication data (3) from the respective control unit (11) with the at least one vehicle-external object (4) via the communication unit (6) and the respective radio link (7) independently of the functional programs (2), and for this purpose provides all the service functions that are necessary for the actual interchange of the communication data (3) with the at least vehicle-external object (4), and
- the functional programs (2) are distributed over the control units (11) and interchange the communication data (3) with the respective service module (16) of the control unit (11) and here the functional programs only interchange communication data (3) with the service module (16) within the control unit (3) and unit-external communication from the control unit (11) to the respective vehicle-external object (4) is executed by the service module (16).

## Revendications

1. Véhicule automobile (1) avec
- une unité de communication (6) qui présente au moins un module radio (8) et est conçue afin de faire fonctionner au moyen d'au moins un module radio (8) une liaison radio (7) respective avec au moins un objet (4) externe au véhicule pour l'échange de données de communication (3), dans lequel
- dans le véhicule automobile (1) plusieurs programmes fonctionnels (2) sont mis à disposition, lesquels sont conçus afin de mettre à disposition une fonctionnalité de véhicule (F1-F4) respective se basant sur les données de communication (3), et dans lequel
- plusieurs unités de commande (11) différentes de l'unité de communication (6) sont mises à disposition et les programmes fonctionnels (2) sont agencés répartis sur les unités de commande (11),
**caractérisé en ce que**
- parmi les unités de commande (11) chacune présente un module de service (16) qui est conçu afin d'échanger indépendamment des programmes fonctionnels (2) les données de communication (3) depuis l'unité de commande (11) respective par l'unité de communication (6) et la liaison radio respective (7) avec l'au moins un objet (4) externe au véhicule et à cet effet de mettre à disposition toutes les fonctions de service qui sont nécessaires à l'échange réel de données de communication (3) avec l'au moins un objet (4) externe au véhicule,
- dans lequel les programmes fonctionnels (2) sont conçus afin d'échanger les données de communication (3) avec le module de service respectif (16) de l'unité de commande (11), et ici les programmes fonctionnels sont seulement conçus afin d'échanger les données de communication (3) dans l'unité de commande (3) avec le module de service (16), et la communication externe à l'unité est mise à disposition par l'unité de commande (11) jusqu'à l'objet (4) externe au véhicule respectif par le module de service (16).

2. Véhicule automobile (1) selon la revendication 1, dans lequel les modules de service (16) des unités de commande (11) sont configurés de manière identique de telle manière qu'un programme fonctionnel (2) puisse être réalisé en alternance aussi sur deux unités de commande différentes (11).

3. Véhicule automobile (1) selon l'une quelconque des revendications précédentes, dans lequel les modules de service (16) sont conçus afin de réaliser pour les programmes fonctionnels (2) une authentification pour l'au moins un objet (4) externe au véhicule et/ou un cryptage de données de communication (3) à émettre et/ou un décryptage de données de communication (3) reçues.

4. Véhicule automobile (1) selon l'une quelconque des revendications précédentes, dans lequel dans au moins deux des unités de commande (11) respectivement une copie du même programme fonctionnel (2) est mise à disposition et les unités de commande (11) sont conçues afin de faire fonctionner actuellement respectivement une des copies.

5. Véhicule automobile (1) selon la revendication 4, dans lequel les unités de commande (11) sont conçues afin d'arrêter pour un changement d'une unité de commande (11) à une autre (11) une des copies en fonctionnement et de déterminer un jeu de paramètre (21) qui décrit un état de fonctionnement actuel de la copie arrêtée et pour une autre des copies de régler l'état de fonctionnement au moyen du jeu de paramètre (21) et de mettre en service cette copie.

6. Véhicule automobile (1) selon la revendication 5, dans lequel une unité d'arbitrage (18) est conçue afin de déterminer une utilisation des ressources respective des unités de commande (11) et d'ajuster par le changement les utilisations de ressources les unes aux autres.

7. Véhicule automobile (11) selon l'une quelconque des revendications précédentes, dans lequel en tant que fonctionnalités de véhicule (F1-F4) au moins une des suivantes est mise à disposition : navigation, commande vocale, traitement de signaux de capteur, communication Car-2-X, télémaintenance.

8. Véhicule automobile (1) selon l'une quelconque des revendications précédentes, dans lequel l'au moins un module radio (8) comporte un module radio mobile et/ou un module WLAN et/ou un module Bluetooth.

9. Véhicule automobile (1) selon l'une quelconque des revendications précédentes, dans lequel l'unité de communication (6) et les unités de commande (11) sont couplées les unes aux autres par un réseau de données orienté sur les paquets (12).

10. Procédé de mise à disposition de plusieurs fonctionnalités de véhicule (F1-F4) qui se basent sur des données de communication (3) échangées avec des objets (4) externes au véhicule, dans un véhicule automobile (1), dans lequel
- une unité de communication (6) fait fonctionner au moyen d'au moins un module radio (8) une liaison radio (7) respective avec l'au moins un objet (4) externe au véhicule, et
- plusieurs programmes fonctionnels (2) mettent à disposition respectivement une des fonctionnalités de véhicule (F1-F4),
**caractérisé en ce que**
- plusieurs unités de commande (11) différentes de l'unité de communication (6) font fonctionner respectivement un module de service (16) qui échange indépendamment des programmes fonctionnels (2) les données de communication (3) depuis l'unité de commande respective (11) par l'unité de communication (6) et la liaison radio respective (7) avec l'au moins un objet (4) externe au véhicule et à cet effet met à disposition toutes les fonctions de service qui sont nécessaires à l'échange réel des données de communication (3) avec l'au moins un objet (4) externe au véhicule, et
- les programmes fonctionnels (2) sont agencés répartis sur les unités de commande (11) et échangent les données de communication (3) avec le module de service respectif (16) de l'unité de commande (11) et ici les programmes fonctionnels échangent seulement des données de communication (3) dans l'unité de commande (3) avec le module de service (16) et la communication externe à l'unité est réalisée de l'unité de commande (11) jusqu'à l'objet (4) externe au véhicule respectif par le module de service (16).
